# EUROPEAN PATENT SPECIFICATION

(11) **EP 2 580 457 B1**
(45) Date of publication and mention of the grant of the patent: **15.02.2017**
(21) Application number: 11729435.5
(22) Date of filing: 08.06.2011
(51) Int. Cl.: F02F 1/00, C23C 4/06

(54) **CYLINDER LINER OF A RECIPROCATING ENGINE**
ZYLINDERBUCHSE EINES HUBKOLBENMOTORS
CHEMISE DE CYLINDRE D'UN MOTEUR ALTERNATIF

(30) Priority: 08.06.2010 FI 20105651
(43) Date of publication of application: 17.04.2013
(73) Proprietor: Wärtsilä Finland Oy, 65380 Vaasa (FI)
(72) Inventor: HARALDSON, Lennart, SE-429 31 Kullavik (SE); SUNDÉN, Hans, SE-402 77 Gothenburg (SE); VILHELMSSON, Fredrik, SE-402 77 Gothenburg (SE)
(74) Representative: Berggren Oy, Helsinki & Oulu
(86) International application number: PCT/FI2011/050536
(87) International publication number: WO 2011/154606

(56) References cited:
- EP-A1- 0 719 917
- EP-A1- 0 837 982
- DE-B3- 10 308 562
- GB-A- 1 136 900
- JP-A- 1 155 061
- JP-A- 7 217 490
- JP-A- 11 071 664
- JP-A- 60 008 447
- JP-A- 60 082 654
- JP-A- 61 144 469
- US-A- 3 620 137

## Description

The invention relates to a cylinder liner of a reciprocating engine.

Severe wear of cylinder liners of diesel engines running on high ash fuel (HAF) has been recorded. The high wear rate have led to pre-mature exchange of cylinder liners, a lot earlier than the expected life time or time between overhaul (TBO). Wear rates, which are up to 30 times higher than normal wear, have been detected.

High cylinder liner wear rate will not only lead to pre-mature exchange of cylinder liners, decreased component life time and TBO, increased maintenance/spare part cost and decreased availability. It will also affect performance like output, efficiency, blow-by, oil consumption, component fouling and reliability, since a worn cylinder liner will lead to reduced sealing to the combustion chamber and influence piston ring motion, oil transport and lubrication.

In spite of several investigations and actions the reason to the wear has not been fully established, but is likely related to the fuel quality (HAF) and the high specific output or a combination of both.

A cylinder liner of a heavy fuel oil of high ash operated reciprocating engine with an anti-polishing ring is known from EP0837982. A cylinder liner of a heavy fuel oil of high ash operated reciprocating engine with a coating only in a top dead center region of a topmost piston ring is known from JP07217490.

The object of the present invention is to improve the wear resistance of the cylinder liner.

The object is achieved as disclosed in claim 1. According to the invention the cylinder liner has an inner surface acting as a running surface for piston rings. The running surface comprises an upper portion, which includes a top dead centre region of a topmost piston ring, and a lower portion. Only the upper portion of the running surface is provided with a coating of metal matrix composite reinforced with ceramic particles.

Significant benefits can be achieved by means of the invention. According to the performed tests the wear of the cylinder liner can be reduced by the metal matrix composite coating. Especially in engines running on high output and with high ash fuel, the wear rate of the cylinder liner can be significantly reduced. As a result, the time between overhaul and the cylinder liner lifetime can be increased. Further, the engine performance and reliability can be improved. Only the upper portion of the running surface is provided with the coating, which reduces the manufacturing time and cost of the cylinder liner.

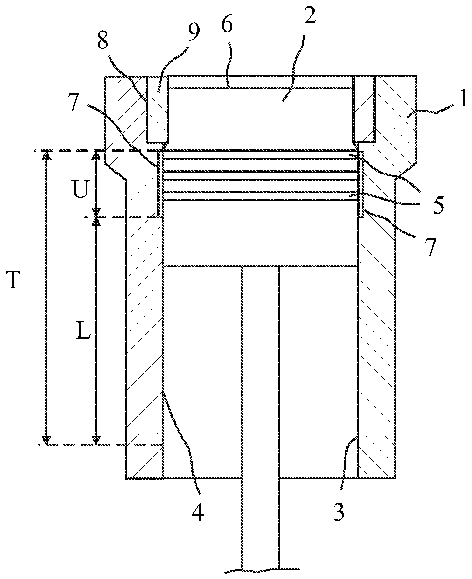

In the following, the invention is described in more detailed manner, by way of an example, with reference to the appended drawing, which shows a cross-sectional view of a cylinder liner according to one embodiment of the invention.

The drawing shows a cylinder liner 1 of a reciprocating engine. The engine is a large reciprocating engine, which can be used as a main and an auxiliary engine in ships and/or in power plants for generation of electricity and/or heat. The engine can be operated by heavy fuel oil (HFO) or high ash fuel (HAF) such as coal-water slurry. The engine is a medium speed, four-stroke engine. The rotational speed of the engine is 300-1200 rpm.

The cylinder liner 1 is a cylindrical component, which is fitted into an engine block to form a cylinder. The cylinder liner 1 forms a cylindrical space in which the piston 2 reciprocates. In the drawing the piston 2 is shown in its top dead centre position. The inner surface 3 of the cylinder liner acts as a running surface 4 for piston rings 5. Piston rings 5 are fitted into grooves on the outer diameter of the piston 2. Typically, each piston has 2-4 piston rings 5. At least the topmost piston ring 5 is chromium-ceramic coated. The inner diameter of the cylinder liner 1 is typically 20-80 cm. The axial length T of the running surface is 30-100 cm. The base material of the cylinder liner 1 is steel or cast iron, typical-ly gray cast iron.

The running surface 4 of the cylinder liner 1 comprises an upper portion U and a lower portion L. The upper portion U includes at least the top dead centre (tdc) region of the topmost piston ring 5 (the piston ring closest to the piston top 6) i.e. the region of the running surface on which the topmost piston 5 ring is located at the tdc position of the piston 2. The length of the upper portion U is at most 30 %, typically at most 20 %, and most typically at most 10 % of the total length T of the running surface. In one embodiment of the invention the upper portion U of the running surface includes the top dead centre region of the piston rings 5 i.e. the region of the running surface on which the piston rings 5 are located at the tdc position of the piston 2. In this embodiment the tdc region extends from the upper edge of the topmost piston ring to the lower edge of the lowest piston ring.

The lower portion of the running surface L includes a bottom dead centre (bdc) region of the piston rings 5 i.e. the region of the running surface on which the piston rings are located at the bdc position of the piston 2.

The top dead centre is the topmost position of the piston 2 i.e. the position in which the piston 2 and piston rings 5 are farthest from the crank shaft during the engine operation. Correspondingly, the bottom dead centre is the lowest position of the piston 2 i.e. the position in which the piston 2 and piston rings 5 are nearest to the crank shaft during the engine operation.

The upper portion U of the running surface is provided with a coating 7 of metal matrix composite (MMC) reinforced with ceramic particles. Metal matrix composites are composed of a metal matrix and a reinforcement material embedded into the matrix.

According to the first embodiment of the invention, the metal matrix of the coating 7 is low alloyed carbon steel. The coating 7 has a carbon content of 1 - 1.3 weight-%.

According to the second embodiment, the metal matrix of the coating 7 is ferritic stainless steel. The coating has a carbon content of 0.4 - 0.5 weight-%. The chromium content of the matrix is 12-15 weight-%. The matrix can include molybdenum (Mo), Nickel (Ni), aluminum (Al) and/or titanium (Ti).

In the first and second embodiments, the metal matrix composite coating 7 comprises 15 - 40 weight %, typically 20 - 35 weight % of ceramic particles. The ceramic particles are alumina (Al₂O₃) and/or zirconia (ZrO₂) particles. Additionally, the ceramic particles may comprise chromium carbide (Cr₂C₃).

In the embodiments described above, the coating 7 extends over the entire perimeter of the running surface 4. Only the upper portion U of the running surface is provided with said coating 7. The entire upper portion U of the running surface can be provided with said coating 7. The lower portion L of the running surface is uncoated i.e. is of the same material as the cylinder liner base material.

The coating 7 can be formed by plasma spraying. Before the application of the coating material, the surface to be coated is surface activated by a suitable method such as grit blasting, water jet or mechanical roughening. After the surface activation, the surface to be coated is cleaned. Thereafter, the coating is applied to the surface by plasma spraying. In plasma spraying process, the coating material is introduced in powder form into the plasma jet emanating from a plasma torch. In the plasma jet the material is melted and propelled towards the surface to be coated. On the surface the molten droplets flatten, solidify and form a coating 7. Thereafter, the coating is finished to a desired surface roughness, e.g. by honing. Typically, the coating 7 is finished to a surface roughness (Rₐ) of 0.2 - 0.5 µm. The thickness of the coating 7 is 0.1-0.4 mm.

The top part of the cylinder liner above the upper portion U of the running surface is provided with a groove 8 for accommodating an anti-polishing ring 9. The anti-polishing 9 ring forms a small step which prevents deposition of carbon onto the piston 2. The anti-polishing ring 9 also removes carbon deposit and carbon residue possibly depositing at the upper portion of the piston 2 during the operation of the engine.

## Claims

1. A cylinder liner (1) of a heavy fuel oil (HFO) or high ash fuel (HAF) operated reciprocating engine, the cylinder liner (2) having an inner surface (3) acting as a running surface (4) for piston rings (5), which running surface (4) comprises an upper portion (U) and a lower portion (L), wherein the upper portion (U) includes at least a top dead center region of a topmost piston ring (5), and the inner surface (3) above the running surface (4) is provided with a groove (8) for accommodating an anti-polishing ring (9), **characterized in that** only the upper portion (U) of the running surface (4) of the cylinder liner (1) is provided with a coating (7) of metal matrix composite reinforced with ceramic particles, the lower portion (L) of the running surface is gray cast iron and uncoated, the metal matrix of the coating (7) is low alloyed carbon steel or ferritic stainless steel, and the coating (7) comprises 15 - 40 weight % of alumina and/or zirconia particles.

2. The cylinder liner (1) according to claim 1, **characterized in that** the length of the upper portion (U) is at most 30 %, typically at most 20 %, most typically at most 10 % of the total length (T) of the running surface.

3. The cylinder liner (1) according to claim 1 or 2, **characterized in that** the lower portion (L) includes a bottom dead center region of the piston rings (5).

4. The cylinder liner (1) according to any of the preceding claims, **characterized in that** only the top dead center region of the piston rings (5) is provided with the coating (7).

5. The cylinder liner (1) according to any of the preceding claims, **characterized in that** surface roughness (Rₐ) of the coating (7) is 0.2 - 0.5 µm.

6. The cylinder liner (1) according to any of the preceding claims, **characterized in that** the thickness of the coating (7) is 0.1 - 0.4 mm.

## Patentansprüche

1. Zylinderbuchse (1) eines mit Schweröl (HFO) oder aschereichem Brennstoff (HAF) betriebenen Hubkolbenmotors, wobei die Zylinderbuchse (2) eine Innenfläche (3) aufweist, die als Lauffläche (4) für Kolbenringe (5) wirkt, wobei die Lauffläche (4) einen oberen Abschnitt (U) und einen unteren Abschnitt (L) umfasst, wobei der obere Abschnitt (U) zumindest einen oberen Totpunktbereich eines obersten Kolbenrings (5) enthält, und die Innenfläche (3) über der Lauffläche (4) mit einer Nut (8) zur Aufnahme eines Antipolishingrings (9) versehen ist, **dadurch gekennzeichnet, dass** nur der obere Abschnitt (U) der Lauffläche (4) der Zylinderbuchse (1) mit einer Beschichtung (7) aus einem mit Keramikteilchen verstärkten Metallmatrixverbund versehen ist, der untere Abschnitt (L) der Lauffläche (4) Graugusseisen und unbeschichtet ist, die Metallmatrix der Beschichtung (7) niedriglegierter Kohlenstoffstahl oder ferritischer Edelstahl ist, und die Beschichtung (7) 15 bis 40 Gew.-% Aluminiumoxid- und/oder Zirconiumoxidteilchen umfasst.

2. Zylinderbuchse (1) nach Anspruch 1, **dadurch gekennzeichnet, dass** die Länge des oberen Abschnitts (U) höchstens 30 %, typischerweise höchstens 20 %, und am typischsten höchstens 10 % der Gesamtlänge (T) der Lauffläche beträgt.

3. Zylinderbuchse (1) nach Anspruch 1 oder 2, **dadurch gekennzeichnet, dass** der untere Abschnitt (L) einen unteren Totpunktbereich der Kolbenringe (5) enthält.

4. Zylinderbuchse (1) nach einem der vorhergehenden Ansprüche, **dadurch gekennzeichnet, dass** nur der obere Totpunktbereich der Kolbenringe (5) mit der Beschichtung (7) versehen ist.

5. Zylinderbuchse (1) nach einem der vorhergehenden Ansprüche, **dadurch gekennzeichnet, dass** die Oberflächenrauheit (Rₐ) der Beschichtung (7) 0,2 bis 0,5 µm beträgt.

6. Zylinderbuchse (1) nach einem der vorhergehenden Ansprüche, **dadurch gekennzeichnet, dass** die Dicke der Beschichtung (7) 0,1 bis 0,4 mm beträgt.

## Revendications

1. Chemise de cylindre (1) d'un moteur à piston alternatif alimenté en fioul lourd (HFO, soit Heavy Fuel Oil) ou en fioul à haut contenu de cendre (HAF, soit High Ash Fuel), la chemise de cylindre (2) présentant une surface interne (3) qui agit comme une surface de glissement (4) pour des segments de piston (5), ladite surface de glissement (4) comprenant une portion supérieure (U) et une portion inférieure (L), dans laquelle la portion supérieure (U) comporte au moins une région de point mort haut d'un segment de piston le plus élevé (5), et la surface interne (3) au-dessus de la surface de glissement (4) est pourvue d'une rainure (8) pour recevoir un segment anti-polissage (9), **caractérisée en ce que** seule la portion supérieure (U) de la surface de glissement (4) de la chemise de cylindre (1) est pourvue d'un revêtement (7) en composite à matrice métallique renforcée par des particules céramiques, la portion inférieure (L) de la surface de glissement est réalisée en fonte grise non revêtue, la matrice métallique du revêtement (7) est réalisée en acier au carbone faiblement allié ou en acier inoxydable ferritique, et le revêtement (7) comprend de 15 % à 40 % en masse de particules d'alumine et/ou de zircone.

2. Chemise de cylindre (1) selon la revendication 1, **caractérisée en ce que** la longueur de la portion supérieure (U) est inférieure ou égale à 30 %, généralement inférieure ou égale à 20 %, et plus généralement inférieure ou égale à 10 % de la longueur totale (T) de la surface de glissement.

3. Chemise de cylindre (1) selon la revendication 1 ou 2, **caractérisée en ce que** la portion inférieure (L) comprend une région de point mort bas des segments de piston (5).

4. Chemise de cylindre (1) selon l'une quelconque des revendications précédentes, **caractérisée en ce que** seule la région du point mort haut des segments de piston (5) est pourvue du revêtement (7).

5. Chemise de cylindre (1) selon l'une quelconque des revendications précédentes, **caractérisée en ce que** l'état de surface (Rₐ) du revêtement (7) est de 0,2 à 0,5 µm.

6. Chemise de cylindre (1) selon l'une quelconque des revendications précédentes, **caractérisée en ce que** l'épaisseur du revêtement (7) est de 0,1 à 0,4 mm.
